(19) Europäisches Patentamt
European Patent Office
Office européen des brevets

(11) Veröffentlichungsnummer: **0 252 346 B1**

(12) **EUROPÄISCHE PATENTSCHRIFT**

(45) Veröffentlichungstag der Patentschrift: **11.09.91**

(51) Int. Cl.$^5$: **C08G 18/79**, C08G 18/42, C08G 18/10, C09D 175/04

(21) Anmeldenummer: **87108743.3**

(22) Anmeldetag: **19.06.87**

# (54) Verfahren zur Herstellung von Isocyanatgruppen aufweisenden Prepolymeren, die nach diesem Verfahen erhältlichen Prepolymeren und ihre Verwendung als Bindemittel in Einkomponentenlacken.

(30) Priorität: **28.06.86 DE 3621706**

(43) Veröffentlichungstag der Anmeldung: **13.01.88 Patentblatt 88/02**

(45) Bekanntmachung des Hinweises auf die Patenterteilung: **11.09.91 Patentblatt 91/37**

(84) Benannte Vertragsstaaten: **AT BE CH DE FR GB IT LI NL SE**

(56) Entgegenhaltungen:
**EP-A- 129 813**
**EP-A- 0 036 975**
**DE-A- 3 219 608**
**DE-A- 3 322 723**
**FR-A- 1 343 812**

(73) Patentinhaber: **BAYER AG**
**W-5090 Leverkusen 1 Bayerwerk(DE)**

(72) Erfinder: **Pedain, Josef, Dr.**
**Haferkamp 6**
**W-5000 Koeln 80(DE)**
Erfinder: **Sonntag, Michael, Dr.**
**Gartenstrasse 27a**
**W-5068 Odenthal(DE)**
Erfinder: **König, Klaus, Dr.**
**Zum Hahnenberg 40**
**W-5068 Odenthal(DE)**

**EP 0 252 346 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, freie Isocyanatgruppen aufweisende Prepolymere durch Umsetzung von überschüssigen Mengen an Isocyanuratgruppen aufweisenden Polyisocyanaten mit Polyesterpolyolen, die nach diesem Verfahren erhältlichen Prepolymeren und ihre Verwendung als Bindemittel in feuchtigkeitshärtenden Einkomponentenlacken.

Feuchtigkeitshärtende Polyurethanlacke auf Basis aliphatischer Polyisocyanate, insbesondere auf Basis von NCO-Prepolymeren mit aliphatisch gebundenen Isocyanatgruppen sind bereits bekannt und z.B. von H. Kittel in "Lehrbuch der Lacke und Beschichtungen", Verlag W.A. Colomb, Berlin-Oberschwandorf 1973, Band 1, Teil 2, S. 574 beschrieben worden. Besondere technische Bedeutung zur Herstellung solcher Bindemittel haben Polyisocyanate mit Biuretstruktur gewonnen, die auf der Basis von Hexamethylendiisocyanat hergestellt werden.

Gegenüber Zweikomponenten-PUR-Lacken haben die bislang bekannt gewordenen feuchtigkeitshärtenden Einkomponenten-PUR-Lacke verschiedene Vorteile; Einfache unkomplizierte Verarbeitung, hohe Härte und schnelle Antrocknung durch Ausbildung eines hochmolekularen Polyurethanharnstoffs. Die feuchtigkeitshärtenden Einkomponentenlacke vom Stand der Technik auf der Basis aliphatischer Isocyanate haben allerdings auch Nachteile, die sich in der Dauerbeständigkeit der Lacke bemerkbar machen. Beispielsweise genügen pigmentierte Lacke auf Basis der bislang bislang bekanntgewordenen NCO-Prepolymeren den Anforderungen der Praxis bezüglich der Vergilbungsresistenz bei Belichtung und bezüglich der Witterungsbeständigkeit oftmals noch nicht in vollem Umfang. Die nicht völlig zufriedenstellende Witterungsbeständigkeit äußert sich in Glanzabfall und Kreidung der entsprechenden Beschichtungen.

Es war die der Erfindung zugrundeliegende Aufgabe, neue, als Bindemittel für feuchtigkeitshärtende Einkomponentenlacke geeignete, Isocyanatgruppen aufweisende Prepolymere zur Verfügung zu stellen, die bezüglich der genannten Eigenschaften den bislang bekannten Prepolymeren überlegen sind.

Diese Aufgabe konnte mit dem nachstehend beschriebenen erfindungsgemäßen Verfahren gelöst werden, bei welchem ausgewählte Isocyanurat-Polyisocyanate mit ausgewählten Polyestern Polyolen zu NCO-Prepolymeren umgesetzt werden.

In Beispiel 8 der DE-A-0129 813 wird ein Zweikomponenten-Lack beschrieben aus einem Isocyanuratgruppen-haltigen Polyisocyanat und einem Polyesterpolyol (NCO/OH-Äquivalentverhältnis = 1:1), welches ein Vergleichsbeispiel darstellen soll, das die Unterlegenheit eines derartigen Zweikomponenten-Systems gegenüber einem analogen Zweikomponenten-System zeigen soll, dessen Polyolkomponente aus einem Gemisch aus Acrylat und Polyester besteht. Irgendwelche Hinweise, daß in Anlehnung an das als unterlegen bezeichnete Zweikomponenten-System (viel zu spröde Lackschichten) hochwertige Einkomponenten-Bindemittel herstellbar sein könnten, werden nicht gemacht. Es müßte vielmehr erwartet werden, daß eine Erhöhung des NCO/OH-Äquivalentverhältnisses zwecks Herstellung von Einkomponenten-Bindemitteln auf Basis der in besagtem Beispiel 8 genannten Ausgangsmaterialien ebenfalls zu mindertwertigen Produkten führen würde.

Die DE-A-3 322 723 beschreibt auf Seite 9 (handschriftliche Numerierung) in Tabelle 3 unter 3. neben anderen NCO-Prepolymeren auch ein solches auf Basis eines HDI-Isocyanurats und einem Polycaprolacton. Dieses NCO-Prepolymer soll ebenso wie die anderen, ebenfalls aufgelisteten Isocyanatgruppen aufweisenden Harze zur Beschichtung von PVC geeignet seien. Die mit diesem speziellen Harz erzielten anwendungstechnischen Ergebnisse sind jedoch größtenteils schlechter als die Ergebnisse, die mit anderen NCO-Prepolymeren erzielt werden. Irgendein Hinweis auf die Verwendung von Polyesterpolyolen mit eingebauten cycloaliphatischen Ringen, wie sie in den erfindungsgemäßen NCO-Prepolymeren zwingend vorliegen, ist dieser Vorveröffentlichung im übrigen nicht zu entnehmen.

Die EP-A-0036975 betrifft ein Verfahren zur Herstellung von Metalleffektlackierungen unter Verwendung von Zweikomponenten-Polyurethanlacken, , bei denen organische Polyisocyanate und Polyhydroxylverbindungen unter Einhaltung eines NCO/OH-Äquivalentverhältnisses von 0,8:1 bis 2,5:1, vorzugsweise 0,9:1 bis 1,5:1 zum Einsatz gelangen. Zwischen Zweikomponenten-Polyurethanlacken einerseits und unter dem Einfluß von Luftfeuchtigkeit aushartbaren Einkomponenten-Polyurethanlacken andererseits besteht jedoch bereits bezüglich des Härtungsmechanismus' ein grundsätzlicher Unterschied, so daß irgendwelche Rückschlüsse bzw. richtungsweisende Hinweise aus dieser Vorveröffentlichtung in Richtung auf das erfindungsgemäße Verfahren nicht möglich sind.

Gegenstand der Erfindung ist ein

Verfahren zur Herstellung von freie Isocyanatgruppen aufweisenden Prepolymeren mit einem Isocyanatgehalt von 1 bis 16 Gew.-% durch Umsetzung

a) einer Polyisocyanatkomponente

mit

b) einer Polyhydroxylkomponente, bestehend aus (i) mindestens einem Polyesterpolyol einer (mittleren) Hydroxylfunktionalität von 1,8 bis 5 und einer (mittleren) Hydroxylzahl von 15 bis 300 oder aus (ii) Abmischungen von Polyesterpolyolen der unter (i) genannten Art mit bis zu 10 Gew.-%, bezogen auf das Gewicht der Abmischung, an gegebenenfalls Estergruppen aufweisenden (Cyclo)Alkanpolyolen einer über 300 liegenden Hydroxylzahl

unter Einhaltung eines NCO/OH-Äquivalentverhältnisses von 7:1 bis 15:1, dadurch gekennzeichnet, daß man als Komponente a)

(i) Triisocyanato-isocyanurate der allgemeinen Formel

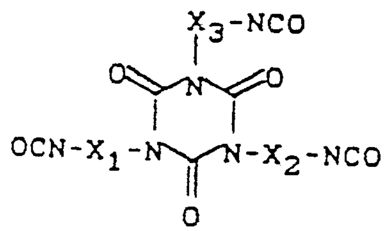

(ii) Gemische der unter (i) genannten Triisocyanatoisocyanurate mit ihren höheren, mehr als einen Isocyanuratring aufweisenden Homologen

oder

(iii) Gemische der unter (i) und (ii) genannten Polyisocyanate mit bis zu 60 NCO-Äquivalentprozent, bezogen auf die Gesamtmenge der Komponente a), an Isocyanuratgruppen-freien organischen Polyisocyanaten

und als Polyesterpolyole b) (i) solche verwendet, die einen Gehalt an eingebauten, gegebenenfalls Alxylsubstiuierten Cyclohexylen-Resten der allgemeinen Formel

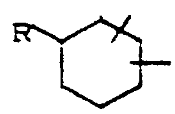

von 15 bis 50 Gew.-% aufweisen,

wobei in den genannten Formeln

$X_1$, $X_2$ und $X_3$ für gleiche oder verschiedene Reste stehen und difunktionelle, aliphatische oder cycloaliphatische Kohlenwasserstoffreste des Molekulargewichtsbereichs 84 bis 206 bedeuten, und

R für Wasserstoff oder einen Alkylrest mit 1 bis 4 Kohlenstoffatomen steht.

Gegenstand der Erfindung sind auch die nach diesem Verfahren erhältlichen, freie Isocyanatgruppen aufweisenden Prepolymeren.

Gegenstand der Erfindung ist schließlich auch die Verwendung der nach diesem Verfahren erhältlichen, freie Isocyanatgruppen aufweisenden Prepolymeren als Bindemittel für feuchtigkeitshärtende Einkomponentenlacke.

Bei der beim erfindungsgemäßen Verfahren einzusetzenden Polyisocyanatkomponente a) handelt es sich um Isocyanuratgruppen aufweisende Polyisocyanate bzw. um Gemische derartiger Polyisocyante mit Isocyanuratgruppen-freien Polyisocyanaten.

Als Isocyanuratgruppen aufweisende Polyisocyanate kommen sowohl (i) Triisocyanato-monoisocyanurate als auch (ii) deren Gemische mit ihren höheren Homologen in Betracht.

Die Triisocyanato-monoisocyanurate entsprechen der obengenannten allgemeinen Formel, wobei die Reste $X_1$, $X_2$ und $X_3$ die obengenannte Bedeutung haben, vorzugsweise jedoch für gleiche oder verschiedene Rest stehen und die die Isocyanatgruppen von 1,6-Diisocyanatohexan und/oder von 1-Isocyanato-3,3,5-trimethyl-5-isocyantomethyl-cyclohexan verknüpfenden Kohlenwasserstoffreste bedeuten. Demnach werden beim erfindungsgemäßen Verfahren als Isocyanuratgruppen aufweisende Polyisocyanate vorzungsweise die Trimerisierungsprodukte dieser beiden Diisocyanate bzw. von deren Gemischen verwendet. Grundsätzlich sind jedoch auch andere, der gemachten Definition von $X_1$, $X_2$ und $X_3$ entsprechende, Isocyanuratgruppen aufweisende Polyisocyanate geeignet, beispielsweise solche bei deren Herstellung aliphatische bzw. cycloaliphatische Diisocyanate wie 1,8-Diisocyanato-octan, 1,11-Diisocyanato-undecan,

4,4-Diisocyanato-cyclohexan, 4,4'-Diisocyanato-dicyclohexylmethanoder Diisocyanate gemäß DE-OS 3 402 623 verwendet bzw. mitverwendet worden sind. Die Herstellung der Isocyanuratgruppen aufweisenden Polyisocyanate kann beispielsweise gemäß DE-PS 2 616 416, EP-OS 3765, EP-OS 10 589, EP-OS 47 452, US-PS 4 288 586, US-PS 4 412 073, DE-OS 3 219 608, EP-OS 0 155 559, EP-OS 0 017 998, DE-OS 2 806 731, EP-OS 0 082 987, EP-OS 0 100 129 oder EP-OS 0 047 452 erfolgen.

Die Frage, ob es sich bei den Isocyanuratgruppen aufweisende Polyisocyanate weitgehend um reine Triisocyantomonoisocyanurate (i) oder um deren Gemische (ii) mit ihren höheren Homologen handelt, hängt in erster Linie von der Art des eingesetzten Ausgangsdiisocyanats und dem Trimerisierungsgrad ab. So ist es beispielsweise möglich aus Diisocyanaten mit einer stark unterschiedlichen Reaktivität der beiden Isocyanatgruppen, beispielsweise aus den aliphatischen-cycloalipathischen Diisocyanaten gemäß DE-OS 3 402 623 auch bei einem um 50 % liegenden Trimerisierungsgrad praktisch reine Triisocyanato-monoisocyanurate herzustellen (DE-OS 3 507 719). Falls als Ausgangsdiisocyanate solche eingesetzt werden, die Isocyanatgruppen gleicher oder nur wenig unterschiedlicher Reaktivität aufweisen, kann die Bildung von höheren Homologen bei der Trimerisierungsreaktion durch vorzeitigen Abbruch der Trimerisierungsreaktion (und anschließende destillative Entfernung des nicht umgesetzten Diisocyanat-Überschusses) in engen Grenzen gehalten werden. Im allgemeinen kommt es jedoch für die Eignung der Isocyanuratgruppen aufweisende Polyisocyanate für das erfindungsgemäße Verfahren auf den Gehalt der Polyisocyanate an höheren Homologen nicht entscheidend an. Die Isocyanuratgruppen aufweisenden Polyisocyanate, die beim erfindungsgemäßen Verfahren als Ausgangskomponenten (ii) eingesetzt werden können, weisen oftmals einen Gehalt an höheren, mehr als eine Isocyanuratgruppe aufweisenden Homologen von bis zu 80 Gew.-% auf. Die Isocyanuratgruppen aufweisenden Polyisocyanate (i) und (ii) weisen im allgemeinen einen Isocyanatgehalt von 10 bis 30, vorzugsweise von 15 bis 25 Gew.-% auf.

Bei den Polyisocyanatgemischen (iii) die ebenfalls beim erfindungsgemäßen Verfahren als Polyisocyanatkomponente a) eingesetzt werden können, handelt es sich um Gemische von Isocyanuratgruppen aufweisenden Polyisocyanaten (i) oder (ii) mit bis zu 60, vorzugsweise bis zu 40 und besonders bevorzugt bis zu 20 NCO-Äquivalentprozent, bezogen auf die Gesamtmenge der Komponente (iii), an Isocyanuratgruppen-freien Polyisocyanaten, insbesondere Diisocyanaten, wie beispielsweise 1,6-Diisocyanatohexan, IPDI oder insbesondere Uretdiondiisocyanaten mit aliphatisch und/oder cycloaliphatisch gebunden Isocyanatgruppen der Formel

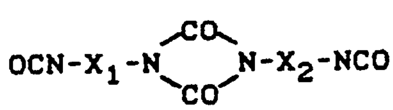

in welcher $X_1$ und $X_2$ die obengenannte Bedeutung bzw. bevorzugte Bedeutung haben. Derartige Uretdionisocyanate entstehen oftmals in untergeordneten Mengen (0,1 bis 5, insbesondere 0,3 bis 3 NCO-Äquivalentprozent) neben den Isocyanuratgruppen aufweisenden Polyisocyanaten bei der Trimerisierungsreaktion von aliphatischen und/oder cycloaliphatischen Diisocyanaten der oben beispielhaft genannten Art. Außerdem können in den Isocyanatgemischen (iii) auch die altbekannten "Lackpolyisocyanate" wie z.B. Tris(6-siocyanatohexyl)-biuret und dessen höhere Homologe oder Urethangruppen aufweisende Polyisocyanate, beispielweise solche, wie sie durch Umsetzung von überschüssigen Mengen an IPDI mit mehrwertigen Alkoholen wie z.B. Trimethylolpropan erhalten werden, als Isocyanuratgruppen-freie Polyisocyanate vorliegen.

Die Komponente a) besteht vorzugsweise zu mindestens 40 NCO-Äquivalentprozent an Triisocyanatomonoisocyanuraten der obengenannten allgemeinen Formel.

Bei der Komponente b) handelt es sich (i) um Polyesterpolyole bzw. Gemische von verschiedenen Polyesterpolyolen einer (mittleren) Hydroxylfunktionalität von 1,8 bis 5, vorzugsweise 2 bis 3, und einer (mittleren) Hydroxylzahl von 15 bis 300, vorzugsweise 40 bis 150, oder um (ii) Abmischungen derartiger Polyesterpolyole mit bis zu 10 Gew.-%, bezogen auf das Gewicht der Abmischung, an, gegebenenfalls Estergruppen aufweisenden (Cyclo)Alkanpolyolen einer über 300 liegenden Hydroxylzahl.

Bei den Polyesterpolyolen (i) handelt es sich um die aus der Polyurethanchemie an sich bekannten Veresterungsprodukte von Di- und/oder Polycarbonsäuren wie z.B. Bernsteinsäure, Adipinsäure, Korksäure, Azelainsäure, Sebacinsäure, Phthalsäure, Isophthalsäure, Terephthalsäure, Tetrahydrophthalsäure, Trimellitsäure, Pyromellitsäure, Hexahydrophthalsäure, Hexahydroterephthalsäure und/oder 1-Methyl-cyclohexan-2,5-dicarbonsäure bzw. von Anhydriden von intramolekularen Anhydriden von Säuren der genannten Art, die zur intramolekularen Anhydridbildung befähigt sind mit überschüssigen Mengen an (Cyclo)Alkanpolyolen,

vorzugsweise -diolen wie Ethylenglykol, Propandiol-1,2, Propandiol-1,3, Diethylengylkol, Butandiol-1,4, Hexandiol-1,6, Octandiol-1,8, Neopentylglykol, 2-Methyl-propandiol-1,3 1,4- und 1,3-Bis(hydroxymethyl)-cyclohexan, Trimethylolpropan, Glycerin, Pentaerythrit, 1,2-, 1,3- oder 1,4-Cyclohexandiol, 2,2-Bis(4-hydroxycyclohexyl)-propan und/oder 2-Methyl-2,4bis(4-hydroxycyclohexyl)-pentan, wobei bei der Herstellung der Polyesterpolyole (i) die Ausgangsmaterialien jedoch so ausgewählt werden, daß die resultierenden Polyesterpolyole 15 bis 50 Gew.-% an 1,2-, 1,3- und/oder 1,4-difunktionellen cycloaliphatischen Resten der Formel

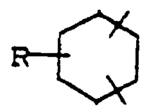

in eingebauter Form enthalten. In dieser Formel steht R für Wasserstoff oder einen Alkylrest mit 1 bis 4 Kohlenstoffatomen, vorzugsweise für Wasserstoff oder einen Methylrest und besonders bevorzugt für Wasserstoff.

Der Einbau dieser Cyclohexylenreste gelingt durch Mitverwendung entsprechender, Cyclohexylenreste aufweisender Dicarbonsäuren oder Diole der oben beispielhaft genannten Art bei der Herstellung der oben genannten Veresterungsprodukte von Polycarbonsäuren mit mehrwertigen Alkoholen, der Polylactone bzw. Polycarbonate.

Bei der Herstellung der Polyesterpolyole aus den beispielhaft genannten Ausgangsmaterialien können, der oben gemachten Angaben bezüglich der Hydroxylfunktionalität entsprechend, auch Monocarbonsäuren wie Benzoesäure oder Hexancarbonsäure oder auch einwertige Alkohole wie n-Butanol oder n-Hexanol anteilig mitverwendet werden. Die Mitverwendung derartiger monofunktioneller Aufbaukomponenten ist jedoch keineswegs bevorzugt.

Anstelle der Polyesterpolyole (i) können beim erfindungsgemäßen Verfahren als Polyhydroxylkomponente b) auch Abmischungen (ii) von derartigen Polyesterpolyolen mit, gegebenenfalls Estergruppen aufweisenden, (Cyclo)Alkanpolyolen einer über 300 liegenden Hydroxylzahl eingesetzt werden. Im Falle der Verwendung derartiger Abmischungen liegt der Gehalt der zuletzt genannten Polyole bei maximal 10 Gew.-%, bezogen auf das Gesamtgewicht der Komponente (ii). Beispiele derartiger Abmischkomponenten sind die oben genannten einfachen (Cyclo)Alkanpolyole oder auch niedermolekulare, Estergruppen aufweisende Polyole wie beispielsweise Adipinsäure-bis(2-hydroxyethyl)-ester.

Die Verwendung der Polyesterpolyole (i) ist gegenüber der Verwendung der genannten Abmischungen (ii) bevorzugt.

Das erfindungsgemäße Verfahren, d.h. die Umsetzung der Komponente a) mit der Komponente b) kann in Abwesenheit von Lösungsmitteln durchgeführt werden, jedoch werden bevorzugt Lösungsmittel der aus der PolyurethanlackTechnologie bekannten Art mitverwendet. Bevorzugte Lösungsmittel sind aromatische Kohlenwasserstoffe wie Toluol, Xylol, höhere Alkylbenzolgemische, aliphatische Kohlenwasserstoffe wie Cyclohexan, polare Lösungsmittel wie Ethylacetat, n-Butyl- und i-Butylacetat, Ethylglykolacetat, Methoxypropylenglykolacetat, Methylethylketon, Methyl-i-amylketon, Cyclohexanon oder beliebige Gemische derartiger Lösungsmittel.

Zur Herstellung der Isocyanatgruppen aufweisenden Prepolymeren wird im allgemeinen die Polyisocyanatkomponente a) bzw. deren Lösungen unter einem Inertgas wie Stickstoff vorgelegt und mit der Polyolkompnente b) bzw. deren Lösungen vermischt und bei 20 bis 160, vorzugsweise 60 bis 120 °C, solange unter Inertgas zur Reaktion gebracht, bis der berechnete NCO-Gehalt erreicht oder leicht unterschritten ist und sich nicht mehr verändert. Die Mengenverhältnisse der Reaktionspartner werden dabei so gewählt, daß ein NCO/OH-Äquivalentverhältnis von 7:1 bis 15:1 vorliegt.

Die resultierenden Verfahrensprodukte weisen, bezogen auf Feststoff, einen NCO-Gehalt von 4 bis 12 Gew.-%, auf.

Falls bei der Herstellung der NCO-Prepolymeren bereits Lösungsmittel der beispielhaft genannten Art mitverwendet worden sind, resultieren unmittelbar Bindemittellösungen für feuchtigkeitshärtende Einkomponentenlacke, die nach Zusatz der üblichen Hilfs- und Zusatzstoffe ihrer Verwendung zugeführt werden können. Im Falle der Herstellung der NCO-Prepolymeren ohne Mitverwendung von Lösungsmitteln der beispielhaft genannten Art können die Umsetzungsprodukte in einem derartigen Lösungsmittel zu einer Bindemittellösung gelöst werden.

Wie aus den gemachten Angaben bezüglich des NCO/OH-Äquivalentverhältnises und bezüglich des Isocyanatgehalts ersichtlich, handelt es sich bei den erfindungsgemäßen Verfahrensproduken um Gemische

von NCO-Prepolymeren mit überschüssigen, nicht umgesetzten Ausgangspolyisocyanaten a), die auch als "NCO-Semiprepolymere" bezeichnet werden. Der im Rahmen der Erfindung benutzte Begriff "Isocyanatgruppen aufweisende Prepolymere" soll auch NCO-Semiprepolymere der genannten Art umfassen.

Die erfindungsgemäßen Bindemittellösungen können mit den üblichen Zusatzstoffen der Polyurethanlack-Technologie vermischt werden. Zu diesen Zusatzstoffen gehören Katalysatoren für die NCO/Wasser-Reaktion wie beispielsweise Dibutylzinndilaurat, Verlaufsmittel wie z.B. Acrylatpolymerisate, z.B. Modaflow® der Fa. Monsanto, Füllstoffe wie Talk oder Schwerspat oder die üblichen anorganischen oder organischen Pigmente.

Die Einkomponentenlacke auf Basis der erfindungsgemäßen Verfahrensprodukte eignen sich vor allem für hochwertige Decklackierungen von denen eine lange Haltbarkeit erwartet wird. Beispielhaft seien folgende Einsatzgebiete genannt: Holzlackierung (Klarlacke für Parkettböden, Bootslacke, Möbellacke); Imprägnierung von Mauerwerk, Beton, Asbestzement und Steinfußböden, Kunststofflackierungen unter Verwendung von lichtechten und farbtonbeständigen Pigmenten o.dgl. Feuchtigkeitshärtende Einkomponentenlacke auf Basis der erfindungsgemäßen Verfahrensprodukte eignen sich insbesondere zur Herstellung von dekorativen, wetter- und farbtonbeständigen Außenlackierungen, die neben einer sehr guten Glanzhaltung und Kreidungsbestandigkeit eine gute Lösungsmittel- Abrieb und Chemikalien-Festigkeit aufweisen sollen. Klarlack-Imprägnierungen auf Basis der erfindungsgemäßen Verfahrensprodukt schützen die beschichteten Oberflächen gegen die Einwirkungen von UV-Licht, Feuchtigkeit, Ölen, Treibstoffen und agressiven Chemikalien. Die erfindungsgemäßen Verfahrensprodukte eignen sich auch als Bindemittel für Korrosionsschutzlacke oder pigmentierte und unpigmentierte Decklacke für Großfahrzeuge wie Busse oder Schienenfarzeuge.

In den folgenden Beispielen beziehen sich alle Prozentangaben auf Gewichtsprozente.

Beispiele

In den nachfolgenden Beispielen werden folgende Ausgangskomponenten eingesetzt:

Polyisocyanat I:

Gedünnschichtetes, Isocyanuratgruppen aufweisendes Polyisocyanat auf Basis von 1,6-Hexandiisocyanat, hergestellt entsprechend Beispiel 1 der EP-A-10 589 mit einem NCO-Gehalt von 21,4%, einer Viskosität (25 °C) von 2.100 mPa.s, einem Gehalt an monomeren 1,6-Diisocyanatohexan von 0,1 % und einem Gehalt an Triisocyanato-monoisocyanurat von ca. 49%.

Polyester I:
Ausgangsmaterialien:
3,48 kg Trimethylolpropan 26,0 Mol
25,83 kg 1,4-Bis(hydroxymethyl)-cyclohexan 179,4 Mol
2,1 kg Ethylenglykol 33,8 Mol
15,14 kg Neopentylglykol 145,6 Mol
49,25 kg Phthalsäureanhydrid 332,8 Mol
3,0 kg $SnCl_2 \times 2H_2O$ als Katalysator.

Herstellung des Polyesters:

Die Ausgangsprodukte (ohne Katalysator) werden in einem 100 l-Kessel eingewogen und unter $N_2$ bis zu einer Temperatur von 140 °C aufgeschmolzen. Nach 1 Stunde bei dieser Temperatur wird unter Abdestillieren von Wasser die Temperatur im Verlauf von 5 bis 6 Stunden auf 200 °C erhöht.

Nach weiteren 2 Stunden wird der Katalysator zugegeben und die Vakuumphase begonnen. Nach etwa 6 Stunden wird das Endvakuum von 15 mbar erreicht. Es wird so lange weiter kondensiert, bis die Säurezahl unter 3 liegt (etwa 12 Stunden).

Der erhaltene Polyester ist ein Festharz mit folgenden Kenndaten :
Säurezahl: <3
OH-Zahl: 48,2
Iod-Farbzahl: 1
Gehalt an Cyclohexylensegmenten ($C_6H_{10}$): 15,85 %

Polyester II:
Ausgangsmaterialien:
9,6 Mol Hexahydrophthalsäureanhydrid
1,9 Mol Trimethylolpropan
4,8 Mol Hexandiol-1,6
4,3 Mol Perhydrobisphenol A

Die Herstellung des Polyesters erfolgt entsprechend der Herstellung von Polyester I.
Kenndaten:
Säurezahl: 8
OH-Zahl: 63
Iod-Farbzahl: 1
Gehalt an Cyclohexylensegmenten ($C_6H_{10}$): 47,25 %

Polyester III:
Ausgangsmaterialien:
3,00 Mol Neopentylglykol
0,75 Mol Ethandiol
3,75 Mol 1,4-Bis(hydroxymethyl)-cyclohexan
6,5 Mol Phthalsäureanhydrid

Die Herstellung des Polyesters III erfolgt in Analogie zur Herstellungsvorschrift für Polyester I.
Kenndaten:
Säurezahl: 2,9
OH-Zahl: 59,6
Iod-Farbzahl: 1
Gehalt an Cyclohexylensegmenten ($C_6H_{10}$): 17,64 %

Beispiel 1
Ansatz
700 g Polyisocyanat I
429 g einer 70 %igen Lösung in ®Solvesso 100 * /2-Methoxypropyl-acetat (4:1) des Polyesters I
240 g ®Solvesso 100 *
60 g 2-Methoxypropyl-acetat

Durchführung:

Das Polyisocyanat wird bei Raumtemperatur vorgelegt, mit der Polyester-Lösung homogen vermischt und die Mischung anschließend mit den Lösungsmitteln verdünnt. Dann wird auf 100° C aufgeheizt und so lange bei dieser Temperatur nachgerührt, bis ein NCO-Gehalt der Lösung von 9,6 % erreicht ist (ca. 5 bis 6 Stunden). Nach dem Abkühlen hat das Produkt als 70 %ige Lösung eine Viskosität von 1.600 mPa.s (25° C).
Weitere Kenndaten des Produkts:
NCO/OH = 13,7
NCO-Gehalt (der Lösung): 9,6 %
Gehalt der Lösung an monomerem Diisocyanat: unter 0,01 %
Farbzahl (DIN 53 409): <20

Beispiel 2

Man verfährt wie in Beispiel 1 angegeben und bringt folgende Substanzen zur Umsetzung:
1.440 g Polyisocyanat I 986 g Polyester III
1.617 g ®Solvesso 100
Man erhält ein Produkt mit folgenden Daten:
60 %ige Lösung in Solvesso 100

*®Solvesso 100 = ein im Handel befindliches Gemisch von Alkylaromaten mit einem Siedebereich 161 bis 179°C.

Viskosität: 600 mPa.s (25 ° C)
NCO/OH = 7,2
NCO-Gehalt der Lösung: 6,3 %
Farbzahl (DIN 53 409): <20
Gehalt an monomerem Diisocyanat: <0,01 %.

Beispiel 3

Man verfährt wie in Beispiel 1 und bringt zur Umsetzung:
2,000 g Polyisocyanat I
889 g Polyester II
963 g Xylol
963 g Butylacetat
Kenndaten des Reaktionsprodukts:
NCO/OH = 10
60 %ige Lösung in Xylol/Butylacetat (1:1)
NCO-Gehalt der Lösung: 7,2
Viskosität der Lösung: 800 mPa.s (25 ° C)

Beispiel 4

Dieses Beispiel beschreibt die Herstellung von Klarlackfilmen und deren Eigenschaften aus den Isocyanat-Prepolymeren der Beispiele 1, 2 und 3.

Die Lösung des betreffenden Prepolymeren wird mit einem Gemisch von Xylol und 2-Methoxypropylacetat (4:1) auf eine Verarbeitungskonzentration von 40 % eingestellt und mit 0,1 % Dibutylzinndilaurat als Katalysator versetzt. Mit einer Lackhantel (Spaltbreite 0,12 mm) werden Klarlackfilme auf saubere, entfettete Glasplatten bzw. Stahlplatten aufgetragen. Die Platten werden bei Umgebungstemperatur (20 bis 25 ° C) und einer rel. Luftfeuchte von 60 % gelagert. Man erhält glänzende, farblose klare Lackfilme. Die Endeigenschaften der Lackfilme sind nach etwa 7 Tagen erreicht. Anschließend werden die Prüfungen durchgeführt. Die Meßergebnisse sind in der Tabelle zusammengefaßt:

| | Bsp. 1 | Bsp. 2 | Bsp. 3 |
|---|---|---|---|
| Sandtrocknung (DIN 53 150) | 4 h | 5 h | 4 h |
| Pendelhärte n. König (DIN 53 157) | 236 | 219 | 227 |
| Anlösbarkeit* n. 7 Tagen Lagerung | | | |
| Einwirkung (1 min) von | | | |
| Ethylglykolacetat | 0 | 0 | 0 |
| Ethylacetat | 0 | 0 | 0 |
| Aceton | 0 | 1 | 0 |
| Superbenzin | 0 | 0 | 0 |
| Abrieb n. DIN 53 109 | | | |
| (Belastung 10 N, 1000 Umdrehungen) | 16 | 18 | 11 |
| Tiefung n. Erichsen (DIN 53 156) | 10,0 | 10,0 | 9,9 |
| (Schichtdicke der Filme: 45-55µm) | | | |

* Die Anlösbarkeit wird in 5 Stufen gemessen:
0, 1, 2, 3, 4.
0 = Film völlig unverändert
4 = Film löst sich auf.

Die Ergebnisse der Lackfilmprüfung zeigen, daß die erfindungsgemäßen Bindemittel zu sehr hochwertigen, harten und dennoch zähelastischen Polyurethanschichten aushärten. Durch Zugabe eines höheren Anteils an Katalysator läßt sich die Trocknung - falls erforderlich - noch beschleunigen.

Beispiel 5

In diesem Beispiel werden die erfindungsgemäßen Isocyanat-Prepolymeren zur Herstellung von pigmentierten Lacken verwendet und die Haltbarkeit der daraus hergstellten Filme untersucht. Um die Beurteilung zu vereinfachen wurden nur Weißlacke hergestellt. Dazu wurden die 70 bzw. 60 %igen Lösungen der Isocyanat-Prepolymeren aus den Beispielen 1, 2 und 3 mit Pigment und Zusätzen versetzt und mit einem Lösemittelgemisch aus Xylol/Butylacetat (3:1) auf eine niedrigere Konzentration eingestellt, so daß die Auslaufzeit (DIN 53 211, 4 mm Düse) 40 sec. Betrug. Das Pigment wurde auf einem Dreiwalzenmischer angerieben.

Die folgende Tabelle gibt die Zusammensetzungen der Anreibungen wieder.

| Bestandteil | Gewichtsteile | | |
|---|---|---|---|
| Polyisocyanatlösung | | | |
| aus Beispiel 1 | 50 | - | - |
| aus Beispiel 2 | - | 58,3 | - |
| aus Beispiel 3 | - | - | 58,3 |
| Lösemittelgemisch: | | | |
| Xylol/Butylacetat (3:1) | 20,5 | 60,2 | 63,4 |
| Siliconöl als Verlaufsmittel (10 %ig in Methoxypropylenglykolacetat | 0,4 | 0,4 | 0,4 |
| Katalysator (Dibutylzinndilaurat) | 0,1 | 0,1 | 0,1 |
| Titandioxid (vom Rutiltyp) | 22 | 22 | 22 |
| Mittel zur Verhinderung des Absetzens des Pigments* | 0,2 | 0,2 | 0,2 |

* hochdisperse Kieselsäure (®Aerosil 300 von Degussa)

Im geschlossenen Gebinde bei sorgfältigem Ausschluß von Feuchtigkeit sind die in der Tabelle aufgeführten Lackansätze mindestens 3 Monate ohne Veränderung lagerfähig.

Proben der spritzfertig eingestellten Lacke werden auf Flußstahlplatten von 0,5 mm Dicke aufgespritzt und die Prüflinge während 14 Tagen bei ca. 23° C und einer relativen Luftfeuchte von 60 % gelagert.

Danach werden die Schlagfestigkeit (ASTM-D 2794). Schaukel-Härte nach König (DIN 53 157) und die Haftfestigkeit im Kreuzschnitt (DIN 53 151) der Lackfilme geprüft. Die Prüfergebnisse sind in der nachstehenden Tabelle zusammengefaßt:

| Beispiel | Schlagfestigkeit Nm(kg x cm) | Härte (sec) | Haftfestigkeit (Gt 0-4) |
|---|---|---|---|
| 1 | 5,9 (60) | 150 | 0 |
| 2 | 4,9 (50) | 130 | 1 |
| 3 | 3,4 (35) | 170 | 0 |

Um die Haltbarkeit der aus den erfindungsgemäßen Isocyanat-Prepolymeren hergestellten Lacke bei Dauerbelastung zu beweisen, wurden die Stahlplatten in Florida einem Bewitterungstest unterzogen. Die zu prüfenden Platten wurden in einem Winkel von 45° ausgelegt. Beurteilt wurde die Veränderung des Glanzes in Abhängigkeit von der Zeit. Die Beurteilung des Glanzes erfolgte nach Gardner bei 60° C (DIN 67 530) im zeitlichen Abstand von 3 Monaten über einen Zeitraum von 18 Monaten. Die Ergebnisse sind in der folgenden Tabelle zusammengefaßt;

| Lackprobe aus | Glanzgrad nach 0 | 3 | 6 | 9 | 12 | 15 | 18 Monaten |
|---|---|---|---|---|---|---|---|
| Beispiel 1 | 98 | 90 | 90 | 85 | 80 | 75 | 70 |
| Beispiel 2 | 97 | 93 | 90 | 85 | 78 | 75 | 72 |
| Beispiel 3 | 98 | 93 | 93 | 89 | 85 | 80 | 75 |

Die Lacke auf den bewitterten Blechen wurden nach Reinigung erneut mechanisch getestet. Es konnte nur ein sehr geringfügiger, praktisch zu vernachlässigender Abfall der Eigenschaften festgestellt werden.

## Patentansprüche

1. Verfahren zur Herstellung von freie Isocyanatgruppen aufweisenden Prepolymeren mit einem Isocyanatgehalt von 1 bis 16 Gew. -% durch Umsetzung

   a) einer Polyisocyanatkomponente

   mit

   b) einer Polyhydroxylkomponente, bestehend aus (i) mindestens einem Polyesterpolyol einer (mittleren) Hydroxylfunktionalität von 1,8 bis 5 und einer (mittleren) Hydroxylzahl von 15 bis 300 oder aus (ii) Abmischungen von Polyesterpolyolen der unter (i) genannten Art mit bis zu 10 Gew.-%, bezogen auf das Gewicht der Abmischung, an gegebenenfalls Estergruppen aufweisenden (Cyclo)-Alkanpolyolen einer über 300 liegenden Hydroxylzahl

   unter Einhaltung eines NCO/OH-Äquivalentverhältnisses Von 7:1 bis 15:1, dadurch gekennzeichnet, daß man als Komponente a)

   (i) Triisocyanato-isocyanurate der allgemeinen Formel

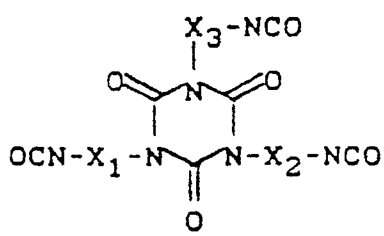

   (ii) Gemische der unter (i) genannten Triisocyanato-isocyanurate mit ihren höheren, mehr als einen Isocyanuratring aufweisenden Homologen

   oder

   (iii) Gemische der unter (i) und (ii) genannten Polyisocyanate mit bis zu 60 NCO-Äquivalentprozent, bezogen auf die Gesamtmenge der Komponente a), an Isocyanuratgruppen-freien organischen Polyisocyanaten

   und als Polyesterpolyole b) (i) solche verwendet, die einen Gehalt an eingebauten, gegebenenfalls Alkyl-substiuierten Cyclohexylen-Resten der allgemeinen Formel

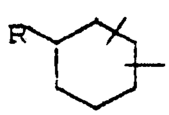

   von 15 bis 50 Gew.-% aufweisen,

   wobei in den genannten Formeln

   $X_1$, $X_2$ und $X_3$ für gleiche oder verschiedene Reste stehen und difunktionelle, aliphatische oder cycloaliphatische Kohlenwasserstoffreste des Molekulargewichtsbereichs 84 bis 206 bedeuten, und

R für Wasserstoff oder einen Alkylrest mit 1 bis 4 Kohlenstoffatomen steht.

2. Verfahren gemäß Anspruch 1, dadurch gekennzeichnet, daß man eine solche Komponente a) verwendet, die zumindest zu 40 NCO-Äquivalentprozent aus Triisocyanato-isocyanuraten der in Anspruch 1 genannten Formel besteht.

3. Gemaß Anspruch 1 und 2 erhältliche, freie Isocyanatgruppen aufweisende Prepolymere.

4. Verwendung der gemaß Anspruch 1 und 2 erhältlichen, freie Isocyanatgruppen aufweisenden Prepolymeren als Bindemittel für feuchtigkeitshartende Einkomponentenlacke.

**Claims**

1. A process for the production of prepolymers containing free isocyanate groups and having an isocyanate content of 1 to 16% by weight by reaction of
   a) a polyisocyanate component
   with
   b) a polyhydroxyl component consisting of (i) at least one polyester polyol having an (average) hydroxyl functionality of 1.8 to 5 and an (average) hydroxyl value of 15 to 300 or of (ii) mixtures of polyester polyols of the type mentioned under (i) with up to 10% by weight, based on the weight of the mixture, of (cyclo)alkane polyols optionally containing ester groups and having a hydroxyl value above 300,
   an NCO/OH equivalent ratio of 7:1 to 15:1 being maintained during the reaction, characterized in that component a) is selected from
   (i) triisocyanatoisocyanurates corresponding to the general formula

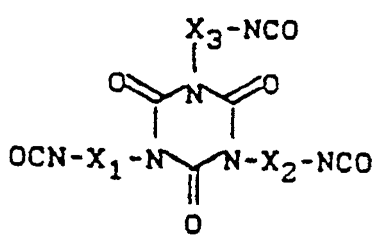

   (ii) mixtures of the triisocyanatoisocyanurates mentioned under (i) with their higher homologs containing more than one isocyanurate ring
   or
   (iii) mixtures of the polyisocyanates mentioned under (i) and (ii) with up to 60 NCO equivalent-%, based on the total quantity of component a), of organic polyisocyanates free from isocyanurate groups,
   while the polyester polyol b) (i) is selected from those which contain 15 to 50% by weight incorporated, optionally alkyl-substituted cyclohexylene radicals corresponding to the following general formula

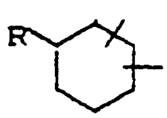

   in the above formulae:
   $X_1$, $X_2$ and $X_3$ may be the same or different and represent difunctional, aliphatic or cycloaliphatic hydrocarbon radicals having a molecular weight in the range from 84 to 206 and
   R represents hydrogen or a $C_{1-4}$ alkyl radical.

2. A process as claimed in claim 1, characterized in that a component a) in which at least 40 NCO equivalent-% consists of triisocyanatoisocyanurates corresponding to the formula in claim 1 is used.

3. Prepolymers containing free isocyanate groups obtainable by the process claimed in claims 1 and 2.

4. The use of the prepolymers containing free isocyanate groups obtainable by the process claimed in claims 1 and 2 as binders for moisture-curing one-component paints.

**Revendications**

1. Procédé pour la préparation de prépolymères présentant des groupes isocyanates libres, ayant une teneur isocyanate de 1 à 16% en poids, consistant à faire réagir

   a) un composant polyisocyanate

   avec

   b) un composant polyhydroxyle constitué par (i) au moins un polyesterpolyol à fonctionnalité hydroxyle (moyenne) de 1,8 à 5 et dont l'indice hydroxyle (moyen) est de 15 à 300 ou par (ii) des mélanges de polyesterpolyols du type mentionné sous (i), avec jusqu'à 10% en poids, rapporté sur le poids du mélange, des (cyclo)alcanepolyols présentant éventuellement des groupes esters et ayant un indice hydroxyle supérieur à 300,

   tout en maintenant un rapport d'équivalence NCO/OH de 7:1 à 15:1, **caractérisé en ce qu'**on utilise comme composant a)

   (i) des triisocyanato-isocyanurates de formule générale

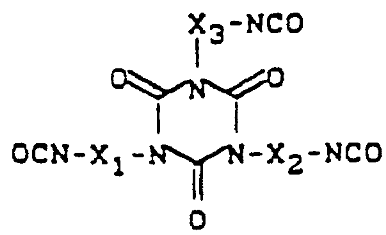

   (ii) des mélanges des triisocyanato-isocyanurates mentionnés sous (i) avec leurs homologues supérieurs, qui présentent plus d'un cycle isocyanurate

   ou

   (iii) des mélanges des polyisocyanates mentionnés sous (i) ou (ii) avec, jusqu'à 60 pour cent d'équivalence NCO, rapporté sur la quantité totale du composant a), des polyisocyanates organiques exempts de groupes isocyanurates

   et comme polyesterpolyols b) (i), on utilise ceux qui présentent une teneur de 15 à 50% en poids en radicaux cyclohexylène incorporés, éventuellement substitués par un groupe alkyle et répondant à la formule générale

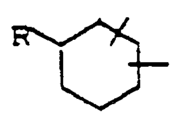

   Dans les formules mentionnées,

   $X_1$, $X_2$ et $X_3$ représentent des radicaux identiques ou différents et désignent des radicaux d'hydrocarbures difonctionnels aliphatiques ou cycloaliphatiques, compris dans le domaine de poids moléculaire de 84 à 206 et

   R représente un atome d'hydrogène ou un radical alkyle contenant de 1 à 4 atomes de carbone.

2. Procédé selon la revendication 1, **caractérisé en ce qu'**on utilise un composant a) qui est constitué, au moins à concurrence de 40% d'équivalence NCO, par des triisocyanato-isocyanurates de la formule mentionnée à la revendication 1.

3. Prépolymères présentant des groupes isocyanates libres, que l'on peut obtenir conformément aux revendications 1 et 2.

4. Utilisation des prépolymères présentant des groupes isocyanates libres et que l'on peut obtenir-conformément aux revendications 1 et 2, comme liants pour des vernis à un composant durcissant à l'humidité.